# EUROPEAN PATENT APPLICATION

(11) **EP 4 553 011 A1**
(43) Date of publication of application: **14.05.2025**
(21) Application number: 23208923.5
(22) Date of filing: 09.11.2023
(51) Int. Cl.: B65G 1/137

(54) **INDUCTION STATION, WAREHOUSE WITH SUCH AN INDUCTION STATION, AND METHOD FOR OPERATING SUCH AN INDUCTION STATION**

(71) Applicant: Dematic GmbH, 63150 Heusenstamm (DE)
(72) Inventor: Huberth, Daniel, 63741 Aschaffenburg (DE); YAMASHITA, Shin, 61440 Oberursel (DE); DREIER, Jörn, 97877 Wertheim (DE)
(74) Representative: Moser Götze & Partner Patentanwälte mbB

(57) **Abstract**

In order to improve an induction station (1) it is suggested, that a first takeaway lane (32) of a first transporting means (30), which is used to transport first transport units (U1) away from a supply position (P0) of the induction station (1), and a second takeaway lane (42) of a second transporting means (40), which is used to transport second transport units (U2) away from an induction position (P1) of the induction station (1), are aligned in a same vertical plane, wherein the vertical plane is oriented in parallel to a gravity vector. It is further suggested, that an induction position (P1) for first transport units (U1) and an induction position (P1) for second transport units (U2) form a common induction position (P1'), allowing induction into the first transport units (U1) and into the second transport units (U2).

## Description

The invention relates to an induction station, to a warehouse with such an induction station, and to a method for operating such an induction station.

Induction stations are generally used to induct items into a sortation and/or picking and/or packing system. The items may be pre-sorted or sorted during the induction process. Such induction stations are often located between a storage system and the sortation and/or picking and/or packing system. Such induction stations may be designed as Goods-To-Person (GTP) stations, where a human picker performs the pick and place operations, or Goods-To-Robot (GTR) stations, where a picking robot performs the pick and place operations.

The document WO 2017/027896 A1 discloses a goods-to-person picking station for picking articles from storage containers into two types of order containers, namely order totes and order pouches. The roller conveyor for conveying the order totes and the overhead conveyor for conveying the order pouches are arranged at two different sides of the picking station, when viewed in conveying direction. The disadvantage of this known picking station is, however, that the picker needs to turn around about 180 degrees to be able to put articles into the respective other one of the two types of order containers.

In view of the above, the object of the invention is to provide an improved induction station and corresponding operation method, which allows an efficient induction process, while providing a high level of ergonomics.

This object is achieved by the induction station according to claims 1 and 4, the warehouse according to claim 17 and the method according to claims 21, 23, and 25. The dependent claims as well as the following specification describe advantageous embodiments of the invention.

The invention relates to an induction station comprising a first transporting means for transporting first transport units to and from a supply position of the induction station, and a second transporting means for transporting second transport units to and from an induction position of the induction station, wherein the first transporting means and the second transporting means are of different type as well as the first transport units and the second transport units are of different type.

In accordance with the invention, it has been recognized that it is advantageous that a first takeaway lane of the first transporting means, which is used to transport the first transport units away from the supply position, and a second takeaway lane of the second transporting means, which is used to transport the second transport units away from the induction position, are aligned in a same vertical plane, wherein the vertical plane is oriented in parallel to a gravity vector.

In other words, the two takeaway lanes of the two different types of transporting means are arranged and aligned in the same vertical plane, i.e. in a common vertical plane, in order to provide an ergonomic design of the induction station. The vertical plane is oriented orthogonally to a horizontal plane, in which, for instance, a floor supporting the induction station is arranged in. The takeaway motion of the two takeaway lanes is preferably heading in the same direction.

The definition "different type(s)" means that the first transporting means and the second transporting means may comprise similar features, such as constantly moving parts, but also have features, that allow a distinctive classification by a skilled person. The same applies to the first transport units and the second transport units.

The first transporting means may have a first infeed lane, which is used to transport the first transport units to be provided at a supply position of the induction station. The second transporting means may have a second infeed lane, which is used to transport the second transport units to be provided at the induction position.

The first takeaway lane is located downstream of the supply position and the second takeaway lane is located downstream of the induction position. The induction station may have a further induction position, wherein the further induction position is preferably located upstream of the induction position.

Preferably, the second transport units are used to receive articles taken from the first transport units. Articles may preferably be inducted into the second transport units at the induction position. However, the further induction position may also be used to induct articles into the second transport units.

One of the second transport units may positioned at the induction position, while a further one of the second transport units may be positioned at the further induction position. This way, simultaneously induction of articles into both second transport units is possible. The further induction position is preferably used for induction, in case batch pick effect can be enjoyed, e.g. small articles that can be grabbed multiple articles in one shot.

The first transport units may be buffered upstream of the supply position, i.e. on the first infeed lane. Also, the second transport units may be buffered upstream of the induction position or the further induction position, i.e. on the second infeed lane.

A major benefit of this improved induction station is that it has a low footprint. No extra space has to be foreseen for one takeaway lane that is arranged in a different vertical plane.

Another benefit of the invention is that the induction station is more ergonomic, since compared to known induction stations fewer movements are required for induction of articles from the first transport units into the second transport units. A human picker standing at a working position of the induction station only has to look ahead and to pick/induct ahead, facing to the common vertical plane. The same applies for a picking robot. This also increases the speed of the induction process and, thus, the speed of a donor exchange and the throughput of the induction station.

It may be advantageously provided that also first transport units are provided at the same induction position as the second transport units, such that the induction position is a common induction position.

In other words, the common induction position is commonly used for induction of articles into the first transport units and the second transport units. At the common induction position either a first order transport unit or a second transport unit is positioned, so that the human picker or the picking robot does not need to turn around to reach for the respective other transport unit for induction.

The common induction position is understood such that the first transport unit and the second transport unit are positioned for induction in the same access area of a human picker or a picking robot. The common induction position does not mean that the first transport unit and the second transport unit need to be positioned for induction at exactly the same spatial position.

A benefit of such a common induction position is that the induction station provides an even more ergonomic design.

The first transport units may then comprise first donor transport units and first order transport units. The first donor transport units may, for instance, be used for transport and storage of articles in a warehouse system and/or for collecting articles for fulfilling an order. Such first donor transport units will preferably be provided at the supply position, whereas the first order transport units will preferably be provided at the common induction position. Then articles may be picked from the first donor transport units and inducted into the first order transport units or into the second transport units. In case the first transport units are totes, the first donor transport units may be donor totes, which are also referred to as product totes or storage totes, and the first order transport units may be order totes.

It may be advantageously provided that a first infeed lane of the first transporting means, which is used to transport the first transport units to the common induction position, and a second infeed lane of the second transporting means, which is used to transport the second transport units to the common induction position, are aligned in a same vertical plane, wherein the vertical plane is oriented in parallel to the gravity vector.

In other words, the two infeed lanes of the two different types of transporting means are arranged and aligned in the same vertical plane, i.e. in a common vertical plane, in order to provide an even more ergonomic design of the induction station. The vertical plane, in which the two infeed lanes are aligned in, does not need to be the same vertical plane, in which the two takeaway lanes are aligned in.

The first transporting means then preferably has two first infeed lanes, wherein one is used to transport the first (order) transport units to the induction position and the other one is used to transport the (donor) first transport units to the supply position.

Such an arrangement allows an even more ergonomic design of the induction station.

The invention also relates to an induction station comprising a first transporting means for transporting first transport units to and from an induction position of the induction station for the first transport units and a second transporting means for transporting second transport units to and from an induction position of the induction station for the second transport units, wherein the first transporting means and the second transporting means are of different type as well as the first transport units and the second transport units are of different type.

In accordance with the invention, it has been recognized that it is advantageous that the induction position for the first transport units and the induction position for the second transport units form a common induction position, allowing induction into the first transport units and into the second transport units.

In contrast to induction stations known from the prior art, where the induction position, at which articles are inducted into the first transport units, and the induction position, at which articles are inducted into the second transport units, are separate from each other, the induction station according to the invention has a common induction position, at which articles can be inducted into the first transport units and into the second transport units.

A major benefit of this improved induction station is that it has a low footprint. No extra space has to be foreseen for one induction position that is arranged separate from the other induction position.

Another benefit of the invention is that the induction station is more ergonomic, since compared to known induction stations fewer movements are required for induction of articles from the first transport units into the second transport units. The human picker standing at a working position of the induction station only has to look ahead and to pick/induct ahead, facing to the common induction position. The same applies for a picking robot. This also increases the speed of the induction process and, thus, the speed of a donor exchange and the throughput of the induction station.

It may be advantageously provided that a first takeaway lane of the first transporting means, which is used to transport the first transport units away from the common induction position, and a second takeaway lane of the second transporting means, which is used to transport the second transport units away from the common induction position, are aligned in a same vertical plane, wherein the vertical plane is oriented in parallel to a gravity vector.

The advantages of such an arrangement are outlined above.

The induction station may also have a supply position, at which first transport units are provided, wherein a further first takeaway lane, which is used to transport the first transport units away from the supply position, may also be aligned in the same vertical plane as the second takeaway lane.

As an alternative, the first takeaway lane and the second takeaway lane may be in different vertical planes. The first transport units and the second transport units would then be transported away from the common induction position in different directions, wherein the different directions would differ from just being opposed.

It may be advantageously provided that a first infeed lane of the first transporting means, which is used to transport the first transport units to the common induction position, and a second infeed lane of the second transporting means, which is used to transport the second transport units to the common induction position, are aligned in a same vertical plane, wherein the vertical plane is oriented in parallel to a gravity vector.

The advantages of such an arrangement are outlined above.

The vertical plane, in which the two infeed lanes are aligned in, does not need to be the same vertical plane, in which the two takeaway lanes are aligned in.

As an alternative, the first infeed lane and the second infeed lane may be in different vertical planes. The first transport units and the second transport units would then be transported towards the common induction position from different directions, wherein the different directions would differ from just being opposed.

It may be advantageously provided that the first takeaway lane, the second takeaway lane, the first infeed lane, and the second infeed lane are aligned in a same vertical plane, wherein the vertical plane is oriented in parallel to the gravity vector.

In other words, the two takeaway lanes and the two infeed lanes are aligned in the same vertical plane. The first (order) transport units and the second transport units are transported to and from the common induction position in the same vertical plane. Preferably, the first transport units and the second transport units are transported to and from the common induction position in the same direction.

In a preferred embodiment, the common induction position is located in a common induction area, which has a further induction position.

The common induction area is such that the further induction position is arranged at least at one of the first transporting means and second transporting means. The common induction area may be such that the further induction position is arranged at both of the first transporting means and the second transporting means. The common induction area may even have more than two induction positions.

The further induction position may be located downstream of the common induction position, such that it can be used to induct an article into a first transport unit or a second transport unit, which has already received an article at the common induction position. Additionally or as an alternative, the further induction position may be located upstream of the common induction position, such that it can be used to induct an article into a first transport unit or a second transport unit, which may afterwards receive an article at the common induction position. The further induction position may also be used to induct an article into one transport unit, while another article is inducted into a further one transport unit located at the common induction position.

Hence, it can be foreseen that an article is inducted into multiple first transport units and/or second transport units positioned at the induction positions at the same time. On the other hand, it is possible that one first transport unit or second transport unit receives an article at more than one of the induction positions or each of the induction positions at different points in time. A mixture of both procedures is also possible.

The further induction position being in a common induction area has the advantage that the induction station is even more ergonomic. The human picker or the picking robot standing at a working position of the induction station just needs to look ahead and to pick/induct ahead, facing to the common induction area.

It may be advantageously provided that the further induction position forms a further common induction position, allowing induction into the first transport units and into the second transport units.

The further induction position being a further common induction position makes the induction station even more ergonomic.

It may also be advantageously provided that the first transporting means is in the form of a roller conveyor or of at least one robotic vehicle and/or the first transport units are in the form of totes and/or the second transporting means is in the form of an overhead conveyor and/or the second transport units are in the form of pouches.

As an alternative to a roller conveyor, the first transporting means may be in the form of a belt conveyor. The first transporting means may be of the accumulation type.

In case the first transporting means is in the form of at least one robotic vehicle, such robotic vehicles preferably have AMR properties (Autonomous Mobile Robot).

As an alternative to totes, the first transport units may be in the form of containers, trays, boxes or pallets.

The overhead conveyor is arranged and configured to transport pouches or hanging adapters or similar along a rail. The second transporting means may be of the accumulation type.

The pouch preferably comprises a holding adapter, a first pouch wall, a second pouch wall, first closing elements positioned at an upper end of the first and second pouch walls, as well as a pouch base at a bottom end of the first and second pouch walls opposite the first closing elements.

The holding adapter is preferably insertable into a rail profile of the overhead conveyor and connectable to a transport chain of the overhead conveyor. The first closing elements preferably comprise a rod assembly, which is preferably formed as a rectangular frame forming an opening, through which the pouch is fillable with articles. For the purpose of filling the pouch, the rod assembly may be pivoted, e.g. by means of a pouch opener, from a vertically oriented position about an axis formed by one rod of the rod assembly to a horizontal position.

The pouch may automatically be opened at the induction position and/or further induction position, preferably by such a pouch opener. Alternatively, at the further induction position, which can be used as a waiting position, the pouch may automatically be pre-opened, in order to save time for the opening operation at the induction position.

The pouch base may be such that it is formed via a connection of the first and second pouch walls. As an alternative, the pouch may further comprise second closing elements, which can reversibly be coupled to each other, positioned at the bottom end of the first and second pouch walls to form the pouch base in a coupled state. The second closing elements may, for instance, be latching strips oriented in parallel with respect to each other, which can be latched onto each other and are formed in such a way that they are displaceable from a transport position closing the pouch into an unlatching position for opening the pouch by displacement relative to each other in the direction of the longitudinal axis of the latching strips.

As an alternative to pouches, the second transport units may be boxes or hangers or similar used in connection with an overhead conveyor.

In a preferred embodiment, the second transporting means is positioned above the first transporting means or vice versa, such that a second clearance profile of the second transport units intersects with a first clearance profile of the first transport units.

In this embodiment the first takeaway lane and the second takeaway lane form a common takeaway lane and/or the first infeed lane and the second infeed lane form a common infeed lane.

The clearance profile is a virtual profile of the respective transport unit, which defines the needed clearance on a pathway to be passed by the respective transport unit. Such a clearance profile is, for instance, known in connection with the construction of railways or roads, in particular tunnels.

The clearance profile includes a cross-sectional area defined by two dimensions of the respective transport unit being in a plane oriented perpendicular to a travel direction of the respective transport unit. The clearance profile is considered along the whole travel of the respective transport unit. In course of the invention, one of the two dimensions defining the cross-sectional, in particular the dimension corresponding to the height of the respective transport unit, is considered more crucial than the other one of the two dimensions, in particular the dimension corresponding to the width of the respective transport unit.

The intersection may be such that the dimension corresponding to the height of the first transport unit completely overlaps the dimension corresponding to the height of the second transport unit or vice versa. Alternatively, the intersection may be such that the dimension corresponding to the height of the first transport unit only partially overlaps the dimension corresponding to the height of the second transport unit or vice versa.

"Intersection" of the first clearance profile with the second clearance profile means that that the first transport units would collide with the second transport units along their travel, if no coordination of a respective transport sequence took place. This provides a nearly single level layout, so that the first transport units and the second transport units are arranged to result in an even more ergonomic layout of the induction station.

The intersection may just take place in a section of the respective travel. For instance, the second infeed lane may then be merging with the first infeed lane upstream of the common induction position, e.g. by means of a section of the second infeed lane arranged with declining angle with respect to the first infeed lane. As another example, the second takeaway lane may be unmerging from the first infeed lane downstream of the supply position and induction position or common induction position, respectively, e.g. by means of a section of the second infeed lane arranged with ascending angle with respect to the first infeed lane.

As an alternative to the intersecting clearance profiles, the second transporting means may be positioned above the first transporting means or vice versa such that there is a distance or gap greater than zero between the second clearance profile and the first clearance profile. The first transport units and the second transport units would then be unable to collide. With such an embodiment of the induction station, which is also referred to as "lead over", an independent control of the first transport units and the second transport units can be implemented.

It may be advantageously provided that the induction station further comprises a picking robot having a robotic arm for picking articles from the first transport units into the second transport units or vice versa.

The robotic arm is rotatable about at least one of the three spatial axes and/or tiltable in one plane. Preferably, the robotic arm is positioned on and attached to a top of a body of the picking robot. The picking robot has an article handling device, which preferably is positioned at an end of the robotic arm being distal from an attachment point, at which the robotic arm is attached to the body. The article handling device may be a gripping device or a vacuum handling device.

Operation of the picking robot, in particular picking articles from a first transport unit, can be supported by means of a camera or any other suitable sensor.

It goes without saying that the picking robot can be used for picking articles from one first transport unit to another one first transport unit, e.g. from a first donor transport unit into a first order transport unit, or even from one second transport unit into another second transport unit.

In a preferred embodiment the picking robot is movable, in order to transform the induction station from an automated state into a manual state, in which an induction process is carried out by a human picker.

In other words, such an embodiment allows to operate the induction station in both the automated state and the manual state. Such an embodiment of the induction station is also referred to as hybrid induction station.

The picking robot being movable means that, in addition to the movements of the robotic arm, movements of the whole picking robot, for instance, a body of the picking robot together with the robotic arm attached thereon, are possible. Preferably, the movements necessary to fulfill the induction process are solely performed by the robotic arm, so that movements of the remaining part(s) of the picking robot, e.g. the body, are only carried out during the transformation process.

Alternatively, the picking robot may be static such that the robotic arm is mounted to a fixed console or similar.

In a further preferred embodiment, the picking robot is slidable, preferably supported on and/or guided by at least one rail, in order to be parked underneath the second transporting means, preferably the second infeed lane.

The at least one rail is positioned at the induction station such that the picking robot is movable between its working position and a parking position. It is more preferred that the picking robot is supported and/or guided via two rails.

The parking of the picking robot underneath the second transporting means, in particular the overhead conveyor, creates space for the human picker to perform the induction process. Although the induction process may be performed by a human picker, even when the picking robot is located at its working position, the parking of the picking robot allows the human picker to position themself at the working position. As a result, the hybrid induction station can be used in the same way as a pure manual induction station, as it allows free movements of the human picker, in order to perform the induction process in a more efficient and more ergonomic way.

It may be advantageously provided that the robotic arm is configured to rotate an article about each of the three spatial axes.

In other words, the robotic arm is configured to rotate the article handling device of the picking robot about each of the three spatial axes. Then, an orientation of the articles in the second transport units, preferably the pouches, may be achieved solely by movements of the robotic arm. This enables the picking robot to place the article into the second transport units such that the article can be transported by means of the second transporting means in the most efficient way.

In a preferred embodiment of the induction station, a safety fence is located between the working position of the induction station and the induction position.

The safety fence is designed such that an article can be inducted into a first transport unit and/or a second transport unit positioned at the (common) induction position. The safety fence may for this purpose have an aperture, such as a window or similar. Alternatively, the safety fence may have such a height that an article can be inducted over the safety fence. The safety fence may, for instance, be made of acrylic glass. Alternatively, the safety fence may be designed as a curtain.

Such a safety fence may preferably be used at an induction station, which is or may be operated by a human picker, i.e. a manual induction station or a hybrid induction station.

The invention is also directed to a warehouse comprising at least one induction station according to the invention and a storage system having at least one storage rack and at least one automatic storage and retrieval device, preferably of the shuttle type, wherein the at least one induction station is connected to the storage system via the first transporting means.

Preferably, the first takeaway lane as well as the first infeed lane are connected to the storage system. Then, first transport units, in particular first donor transport units, can be withdrawn from the storage system and introduced to the induction station, in particular transported to the supply position to be provided there for picking of articles from the first transport units. After completion of picking each article that is needed from the respective first transport unit, the respective first transport unit can be withdrawn from the induction station and re-introduced into the storage system.

The at least one storage rack may allow for single deep, double deep or multiple deep storage of the first transport units. A load handling device of the automatic storage and retrieval device is implemented to allow such deep storage by having a respective extension length.

The storage system may have at least one lift connected to the storage rack. The lift has a lift platform and may be used to transfer the first transport units and/or the shuttle between rack levels. Further, the automatic storage and retrieval device is able to travel such that it may discharge first transport units to and receive from the at least one lift. The first transporting means may implement an interface to the at least one lift, so that first transport units may be selectively loaded onto the lift platform or discharged from it.

The shuttle is single-level automatic storage and retrieval device. The shuttle may be designed to serve more than one level, but only few levels. The shuttle preferably features a load carrying area for carrying the first transport units. The load carrying area is located between two telescopic arms forming the load handling device for placing and removing of first transport units to and from the at least one storage rack. The shuttle moves along rails attached to the forefront of the storage rack. The shuttle is provided with electricity and data via the rails.

Alternatively, an automatic storage and retrieval device with a stacked arrangement of two load handling platforms or an elevating platform may be used in connection with the invention for serving several levels from a single rail.

Besides storage of the first transport units, the storage system can be used for sequencing of the first transport units.

The warehouse may comprise a central control used for operating the storage system and the induction station. Alternatively or additionally, each the storage system and the induction station may comprise local controls, which preferably are communicatively connected to each other, in order to operate together.

In a preferred embodiment, the warehouse comprises at least two induction stations according to the invention, wherein the first transporting means comprises a connecting conveyor, and wherein the two induction stations are connected to each other via the connecting conveyor, wherein the connecting conveyor preferably is positioned in and connected to the first infeed lane and the first takeaway lane of each of the at least two induction stations.

Preferably, each of the at least two induction stations is connected to the storage system via the first transporting means.

The connecting conveyor is used to transport articles in first transport units between the at least two induction stations. At least the first infeed lane of one the induction stations and at least the first takeaway lane of the respective other one of the induction stations are connected to the connecting conveyor for exchange of first transport units therewith.

The connecting conveyor is preferably arranged along a front of the storage system positioned between the storage system and the at least two induction stations. Then the first infeed lane and/or the first takeaway lane bridge the connecting conveyor. So-called right-angle-transfers (RAT) may be arranged at junctions of the first infeed lane or the first takeaway lane with the connecting conveyor, by means of which a transporting direction of a first transport unit is changed from a first transporting direction to a second transporting direction perpendicular to the first transporting direction.

The connecting conveyor may be a two or multiple-story conveyor with a first level and a second level performing transportation of first transport units in opposite transporting direction. Alternatively, the first level may be used for transportation of first donor transport units and the second level for transportation of first order transport units.

With the warehouse having at least two induction stations, the second transporting means may then preferably have two main lanes. A second main infeed lane may be arranged such that the at least two second infeed lanes are connected to the second main infeed lane, for instance, via switches. The second main infeed lane is preferably located upstream of the at least two induction stations. A second main takeaway lane may be arranged such that the at least two second takeaway lanes are connected to the second main takeaway lane, for instance, via switches. The second main takeaway lane may be located downstream of the at least two induction stations. The two main lanes may be connected, in order to form a circulating second transporting means.

It may be advantageously provided that the warehouse comprises at least one induction station being in an automated state and having a picking robot according to the invention, and at least one induction station being in a manual state, in which an induction process is carried out by a human picker.

The at least one induction station being in the automated state may be a hybrid induction station or an automated induction station. Also, the at least one induction station being in the manual state may be a hybrid induction station or a manual induction station.

The embodiment with the at least two induction stations being in different states allows the method described below, where articles that were not picked by the picking robot or that is generally not pickable by the picking robot are transported to the induction station in the manual state for manual induction by a human picker.

In a preferred embodiment of the warehouse, the warehouse comprises at least two induction stations according to the invention, and the storage system comprises at least four multi-level storage racks arranged in pairs of two storage racks with an aisle between the two storage racks, wherein a storage rack of a first pair is arranged back to back with a storage rack of a second pair, and/or wherein the storage system comprises multiple automatic storage and retrieval devices, preferably of the shuttle type, which preferably are provided in each aisle and/or each level of the at least four storage racks, and wherein each of the at least two induction stations is connected to one of the pairs of two storage racks.

Each induction station is connected to the respective pair of two storage racks by means of the first transporting means, preferably by means of the first infeed lane and the first takeaway lane. In case the warehouse comprises a connecting conveyor, the connecting conveyor is preferably arranged along a front of the storage system across the aisles.

The automatic storage and retrieval device travels along the aisle and is able to place or remove first transport units to and from both storage racks of the pair it is assigned to.

The invention is also directed to a method for operating an induction station with a first transporting means having a first takeaway lane used to transport first transport units away from a supply position of the induction station, and with a second transporting means having a second takeaway lane used to transport the second transport units away from an induction position of the induction station, wherein the first takeaway lane and the second takeaway lane are aligned in a same vertical plane oriented in parallel to a gravity vector, wherein by means of a control, preferably of the induction station, a motion of the first transport units and the second transport units at their takeaway from the supply position and the induction position is synchronized.

Such synchronized takeaway motion avoids a collision between the first transport units and the second transport units, in case the first clearance profile intersects with the second clearance profile.

The synchronized takeaway motion preferably continues until the first clearance profile and the second profile do not intersect with each other anymore. For such unmerging purpose, the second transport units may be gradually inclined by means of a respective section of the second transport means, until a bottom of the second transport units would no longer collide with a top of the first transport units.

When the step of picking each of the designated articles from a first transport unit is completed, the first transport unit is only indexed towards the common takeaway lane, in case no second transport unit is currently indexed towards the common takeaway lane. Accordingly, when the step of inducting each of the designated articles into a second transport unit is completed, the second transport unit is only indexed towards the common takeaway lane, in case no first transport unit is currently indexed towards the common takeaway lane.

The control of the induction station is a local control, which preferably is communicatively connected to a central control of a warehouse the induction station is installed in. Alternatively, such a central control of the warehouse may operable to perform the method described above.

In a preferred embodiment of the method, the first transporting means has a first infeed lane used to transport the first transport units to a common induction position, and the second transporting means has a second infeed lane used to transport the second transport units to the common induction position, wherein the first infeed lane and the second infeed lane are aligned in a same vertical plane oriented in parallel to the gravity vector, wherein by means of the control a motion of the first transport units and the second transport units at their infeed to the common induction position is controlled, such that the motion is either synchronized or such that a first transport unit overtakes a second transport unit, or vice versa.

Such synchronized infeed motion is carried out in an analogous way as the synchronized takeaway motion. That means, the first transport unit is only indexed towards the common infeed lane, in case no second transport unit is currently indexed towards the common infeed lane, and vice versa.

Since, due to the common induction position, also first order transport units are involved, the synchronized takeaway motion described above, in particular, involves synchronized takeaway motion of second transport units, first donor transport units, and first order transport units.

Overtaking means here, for instance, although the clearance profile of the second transport unit being a pouch may intersect with the clearance profile of the first transport unit being a tote, the pouch may be passively folded away at its infeed to the common induction position only by being transported via the second transporting means past the tote, which is either standing still or transported at a lower speed than the pouch.

The invention is also directed to a method for operating an induction station with a first transporting means for transporting first transport units to and from a common induction position of the induction station and with a second transporting means for transporting second transport units to and from the common induction position, wherein by means of a control, preferably of the induction station, a motion of the first transport units and the second transport units at their takeaway from the common induction position is synchronized and/or a motion of the first transport units and the second transport units at their infeed to the common induction position is controlled, such that the motion is either synchronized or such that a first transport unit overtakes a second transport unit, or vice versa.

The detailed description with regard to the method for an induction station with a supply position and an induction position analogously applies to the method for the induction station with the common induction position.

In a preferred embodiment of the method, the synchronized motion includes an infeed or a takeaway of the first transport units and the second transport units in an alternating manner.

In other words, the first transport units and the second transport units are alternatingly indexed towards the common takeaway lane or towards the common infeed lane.

The invention is also directed to a method for operating a system of at least two induction stations according to the invention, wherein at least one of the induction stations is in a manual state and at least one of the induction stations is in an automated state and having a picking robot according to the invention, wherein the at least two induction stations are connected to each other via a connecting conveyor, wherein first transport units or second transport units containing at least one article that was originally assigned to the induction station in the automated state, but was not picked by the picking robot, or is generally not pickable by the picking robot, is transported to the induction station being in the manual state by means of the connecting conveyor.

The induction station in the automated state may be a hybrid induction station, so that the induction station is transformable to the manual state. The same applies to the induction station in the manual state in the opposite direction. Alternatively, the induction station in the automated state and/or the induction station in the manual state may be inconvertible and, hence an automated induction station or a manual induction station.

The case, where the article was not picked by the picking robot as intended, is also referred to as error picking. If the control determines such a pick failure the concerned first transport unit is rerouted to the induction station in the manual state. The induction station in the manual state may, therefore, be referred to as a pick-failure back-up induction station.

The case, where the article is generally not pickable by a picking robot, the respective first transport unit is also referred to as "ugly" first (donor) transport unit or simply "ugly donor". Such first transport units with at least one non-pickable article may be directly routed to the induction station in the manual state.

Such a routing method includes comprehensive strategies for carrying out the induction process and also fall-back options for the interaction of picking robots and human pickers.

Further features and details of the invention are apparent from the description hereinafter of the drawing, in which
Figure 1 shows a schematic top view of an embodiment of a manual induction station;
Figure 2a shows a schematic top view of a further embodiment of the manual induction station;
Figure 2b shows a schematic perspective view of the embodiment of the manual induction station according to Figure 2a;
Figure 3 shows a schematic perspective view of a further embodiment of the manual induction station;
Figure 4 shows a schematic perspective view of a further embodiment of the manual induction station;
Figure 5 shows a schematic perspective view of an embodiment of a hybrid induction station being in an automated state;
Figure 6 shows a schematic perspective view of a further embodiment of the hybrid induction station being in the automated state;
Figures 7a-7d show schematic perspective views of a further embodiment of the hybrid induction station being in the automated state, each at a different point in time;
Figure 8 shows a schematic perspective view of an embodiment of a warehouse with five induction stations according to the invention;
Figure 9a shows a schematic top view of a further embodiment of a manual induction station;
Figure 9b shows a schematic perspective view of the embodiment of the manual induction station according to Figure 9a;
Figure 9c shows another schematic perspective view of the embodiment of the manual induction station according to Figure 9a;
Figure 10 shows a schematic perspective view of a further embodiment of a warehouse with five induction stations according to the invention;
Figure 11 shows a schematic perspective view of a further embodiment of a manual induction station;
Figure 12a shows a schematic front view of a first clearance profile intersecting with a second clearance profile; and
Figure 12b shows a schematic front view of non-intersecting first and second clearance profiles.

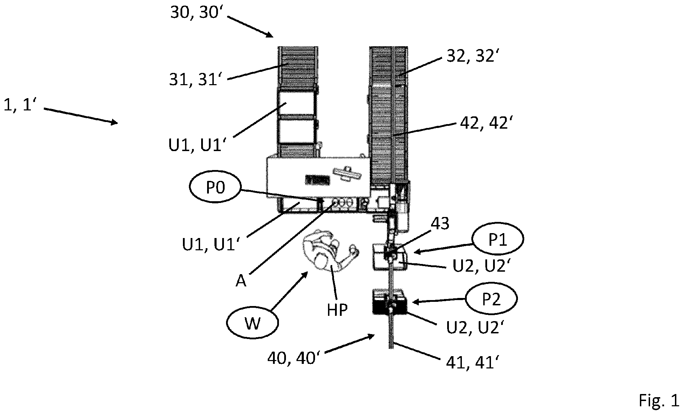

Figure 1 shows a schematic top view of an embodiment of a manual induction station 1'.

The manual induction station 1' is a version of the induction station 1 and is operated by a human picker HP, who stands at a working position W of the induction station 1. The human picker HP inducts articles A into second transport units U2, here being pouches U2', by picking the articles A from first transport units U1, here being donor totes U1', and putting the articles A into the second transport units U2.

The human picker HP may induct articles A into a second transport unit U2 at an induction position P1. At the induction position P1 there is a pouch opener 43, which opens the pouch U2'. The human picker HP may also induct articles A into a second transport unit U2 at a further induction position P2, which is located upstream of the induction position P1 and which can also be used as a waiting position. At the further induction position P2 there may be also a pouch opener 43, which may also open or pre-open the pouch U2'.

The induction station 1 comprises a first transporting means 30 for transporting the first transport units U1 to and from a supply position P0. The induction station further comprises a second transporting means 40 for transporting the second transport units U2 to and from the induction position P1 as well as to and from the further induction position P2. The first transporting means 30 is of the roller conveyor type, whereas the second transporting means 40 is of the overhead conveyor type.

A first takeaway lane 32 of the first transporting means 30, here being a donor tote takeaway lane 32', is used to transport the first transport units U1, here being donor totes U1', away from the supply position P0.

A second takeaway lane 42 of the second transporting means 40, here being a pouch takeaway lane 42', is used to transport the second transport units U2, here being pouches U2', away from the induction position P1.

The first takeaway lane 32 and the second takeaway lane 42 are aligned in a same vertical plane, as the second takeaway lane 42 is positioned above the first takeaway lane 32 and their transporting path is equally aligned. That means for the shown embodiment, the pouch takeaway lane 42' is positioned above the donor tote takeaway lane 32' and the transporting path of the pouch takeaway lane 42' is equally aligned with the transporting path of the donor tote takeaway lane 32'.

A first infeed lane 31 is used to transport first transport units U1 towards the supply position P0, in order to provide the human picker HP with the articles A. The first infeed lane 31 can be used to buffer the first transport units U1.

A second infeed lane 41 is used to transport second transport units U2 towards the further induction position P2 and subsequently to the induction position P1. The second infeed lane 41 can be used to buffer the second transport units U2.

The first infeed lane 31 and the second infeed lane 41 are arranged in such a way that the human picker HP can reach the articles A in the donor totes U1' as well as the pouches U2' with just a few movements. The human picker HP does not need to turn around or undergo similar movements. This makes the induction station 1 an ergonomic induction station 1.

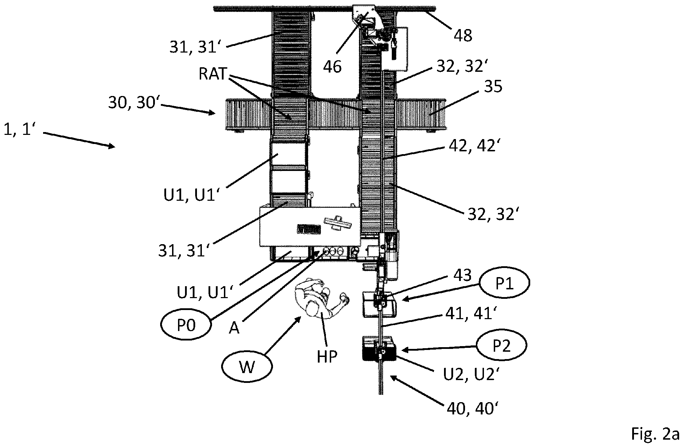

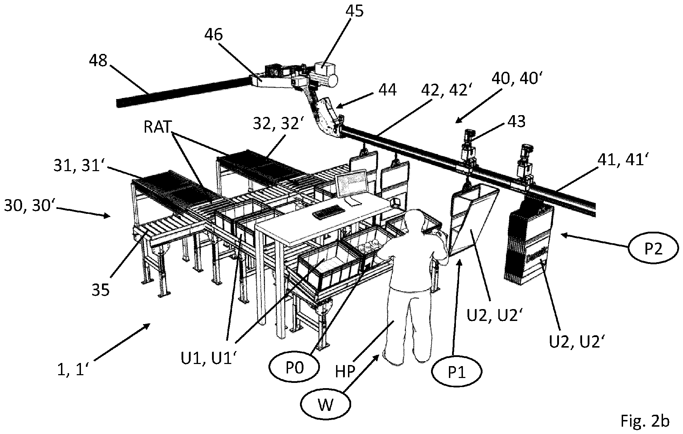

Figure 2a shows a schematic top view of a further embodiment of the manual induction station 1'. Figure 2b shows a schematic perspective view of the embodiment of the manual induction station 1' according to Figure 2a.

Compared to the embodiment shown in Figure 1, the embodiment in Figure 2a and 2b is shown with an optional connecting conveyor 35. The first infeed lane 31 bridges the connecting conveyor 35 and carries on to the induction station 1. The first takeaway lane 32 bridges the connecting conveyor 35 and carries on away from the induction station 1.

At a junction of the first infeed lane 31 with the connecting conveyor 35 as well as at the junction of the first takeaway lane 32 with the connecting conveyor 35, there are so-called right-angle-transfers RAT to change a transporting direction of a first transport unit U1 from a first transporting direction to a second transporting direction perpendicular to the first transporting direction.

Further, compared to the embodiment shown in Figure 1, the second takeaway lane 42, i.e. the pouch takeaway lane 42', is connected to an optional second main takeaway lane 48 via a switch 46. The second main takeaway lane 48 is used for the takeaway of second transport units U2 from more than one induction station 1. Hence, the second takeaway lane 42 of a further induction station 1 is also connected to the second main takeaway lane 48.

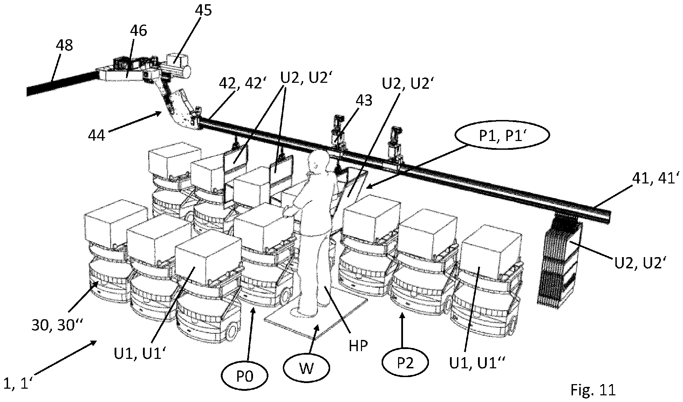

As can be seen in Figure 2b, the second takeaway lane 42 is positioned at such a height above the first takeaway lane 32 that a second clearance profile CP2 of the second transport units U2 intersects with a first clearance profile CP1 of the first transport units U1 (see Figure 11a). A motion of the first transport units U1 and the second transport units U2 at their takeaway from the induction position P1 is synchronized, in order to avoid a collision between the first transport units U1 and the second transport units U2, which here means a collision between a pouch U2' and a donor tote U 1'.

A control (not shown) that is used for carrying out and/or supervising the synchronized takeaway motion may be a local control of the induction station 1 or a central control, for instance, of a warehouse.

The second transporting means 40 comprises a lifting mechanism 44 (see Figure 2b), which is between the pouch takeaway lane 42' and the switch 46. The lifting mechanism has a motor 45 and is configured to lift the pouches U2' to a level allowing transporting of the second transport units U2 over first transport units U1 without intersection of the first clearance profile CP1 with the second clearance profile CP2 (see Figure 11b).

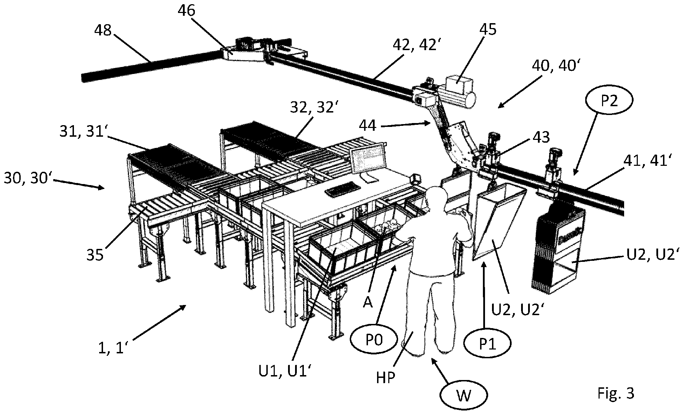

Figure 3 shows a schematic perspective view of a further embodiment of the manual induction station 1'.

Compared to the embodiment shown in Figures 2a and 2b, the lifting mechanism 44 is positioned downstream of and adjacent to the induction position P1. Due to such configuration the second transport units U2 are lifted to a level at which there is a gap greater zero between the first clearance profile CP1 and the second clearance profile CP2, so that the clearance profiles CP1, CP2 are non-intersecting (see Figure 11b). In other words, the pouches U2' are lead over the donor totes U 1', for which reason such embodiment of the induction station 1 is also referred to as "lead over" version.

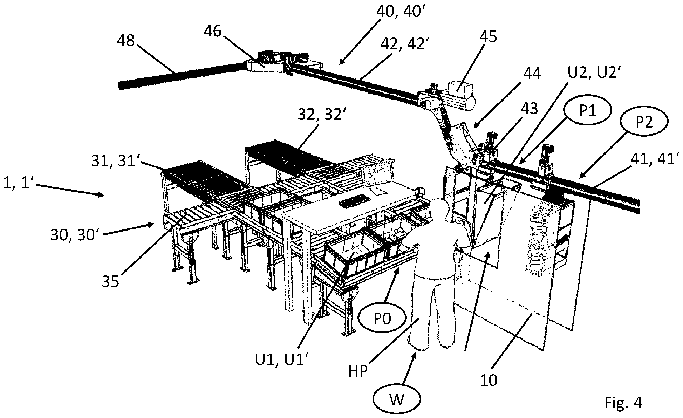

Figure 4 shows a schematic perspective view of a further embodiment of the manual induction station 1'.

Compared to the embodiment shown in Figure 3, this embodiment of the induction station 1 comprises a safety fence 10. The safety fence 10 is positioned between a working position of the induction station 1, at which the human picker HP stands, and the induction position P1. The safety fence 10 has a window 10a, which allows induction of articles A into the second transport units U2. Since there is no further window for induction of articles A at the further induction position P2, this may be used as a waiting position.

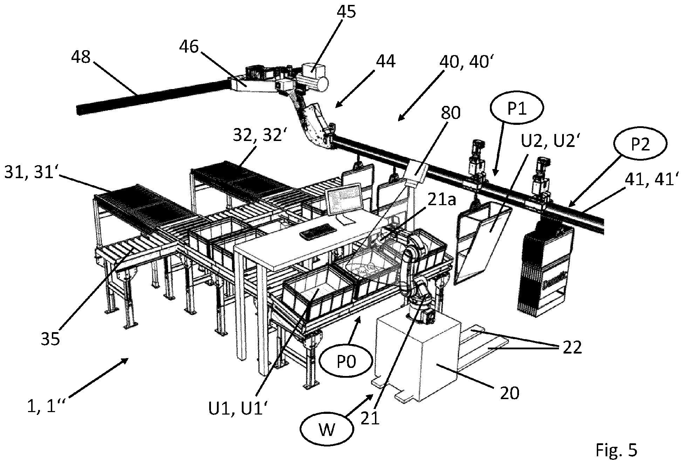

Figure 5 shows a schematic perspective view of an embodiment of a hybrid induction station 1" being in an automated state.

The difference to the embodiment shown in Figures 2a and 2b is that the induction station 1 shown here is operated in an automated state. In other words, the induction process is carried out by a picking robot 20 instead of a human picker HP. The picking robot 20 is supported on two rails 22, which allow sliding of the picking robot 20 from the depicted working position W to a parking position PP. By this, the induction station 1 may be transformed from the automated state to a manual state, in which the induction process is carried out by a human picker HP. Hence, the shown induction station 1 is a hybrid induction station 1". The parking position PP is underneath the second infeed lane 41 of the second transporting means 40.

The picking robot 20 has a robotic arm 21 with a gripping device 21a for handling of the articles A. A camera 80 is positioned above and directed to a position for the first transport units U1 dedicated for the picking of articles A from the first transport units U1. A control (not shown) is used to control the picking robot 20 based on information received from an order fulfillment database system. This control may be a local control of the induction station 1 or a central control, for instance, of a warehouse 100. The control will receive input and data from the camera 80.

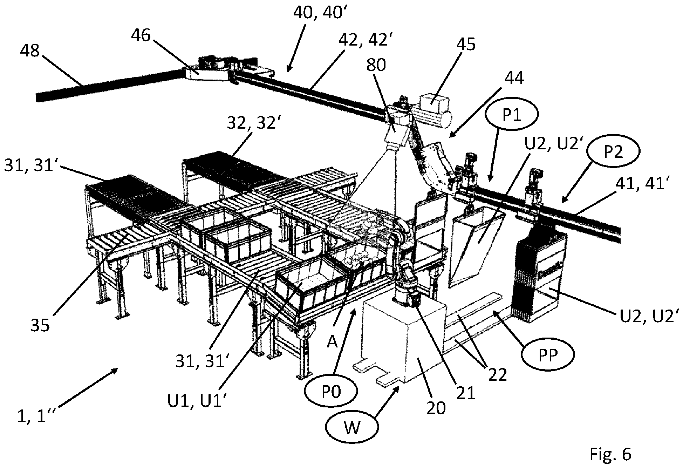

Figure 6 shows a schematic perspective view of a further embodiment of the hybrid induction station 1" being in an automated state.

Compared to the embodiment shown in Figure 5, a "lead over" version of the hybrid induction station 1" is shown here.

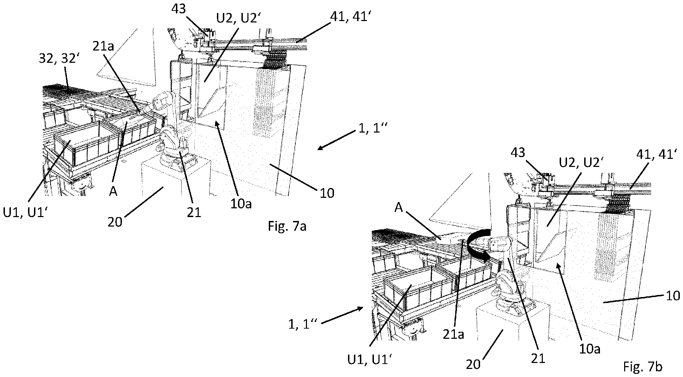

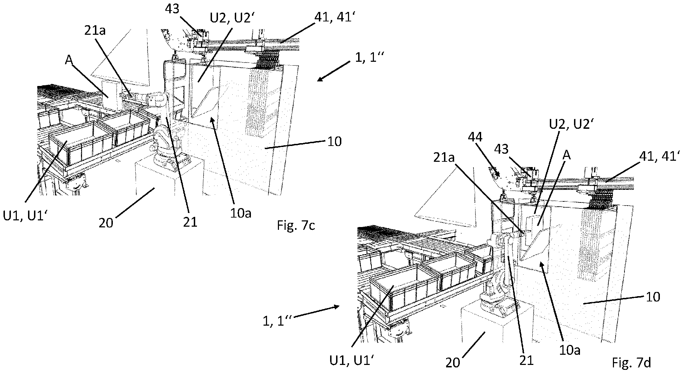

Figures 7a-7d show schematic perspective views of a further embodiment of the hybrid induction station 1" being in an automated state, each at a different point in time.

The robotic arm 21 of the picking robot 20 is movable in each of the three spatial axes. Thus, an orientation of the article A inside the pouch U2' can be predetermined by means of the robotic arm 21. This enables the picking robot 20 to place the article A into the second transport unit U2 such that the article A can be transported by means of the second transporting means 40 in the most efficient way.

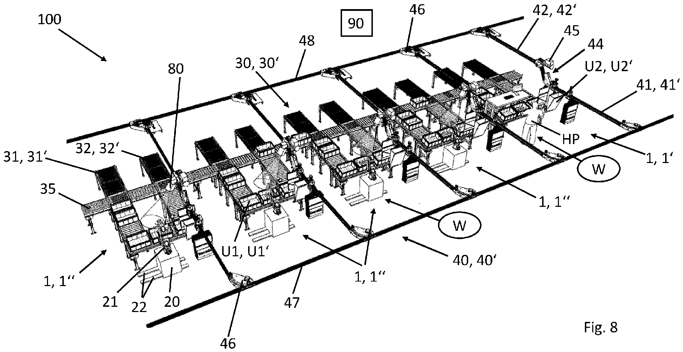

Figure 8 shows a schematic perspective view of an embodiment of a warehouse 100 with five induction stations 1, 1', 1" according to the invention.

Four of the five induction stations 1 are hybrid induction stations 1" and one is a manual induction station 1'.

The warehouse 100 further comprises a storage system 90 (not shown). The first infeed lanes 31 are used to transport first transport units U1, which were withdrawn from the storage system 90, towards the working position of the respective induction station 1. The first takeaway lanes 32 are used to transport the first transport units U1 from the respective induction station 1 towards the storage system 90. Each of the induction stations 1 may thereby be connected to one pair of storage racks of the storage system 90.

The second transporting means 40 has a second main infeed lane 47 and a second main takeaway lane 48. The second main infeed lane 47 is arranged such that the second infeed lanes 41 are connected to the second main infeed lane 47 via switches 46. The second main infeed lane 47 is located upstream of the induction stations 1. A second main takeaway lane 48 is arranged such that the second takeaway lanes 42 are connected to the second main takeaway lane 48 via switches 46. The second main takeaway lane 48 is located downstream of the induction stations 1.

Further, the induction stations 1 are connected to each other via the connecting conveyor 35. The connecting conveyor 35 is positioned in and connected to the respective first infeed lane 31 and the respective first takeaway lane 32 of each induction station 1.

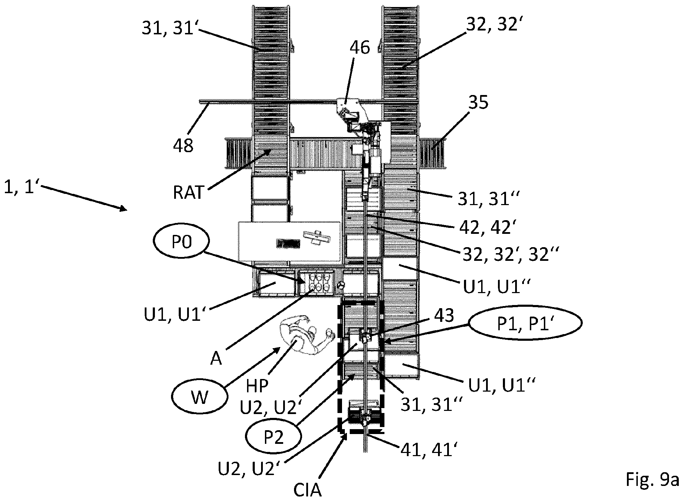

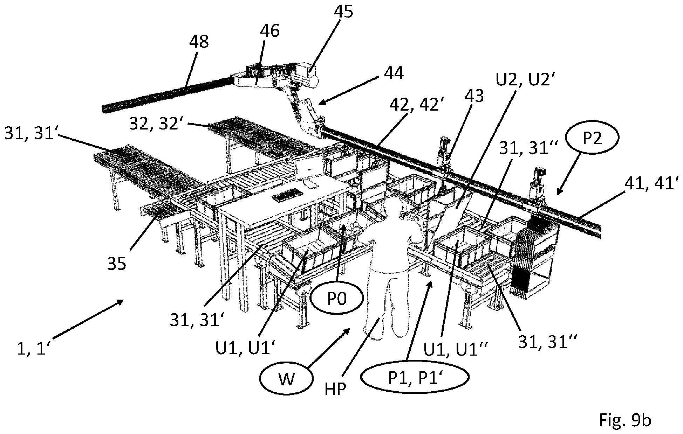

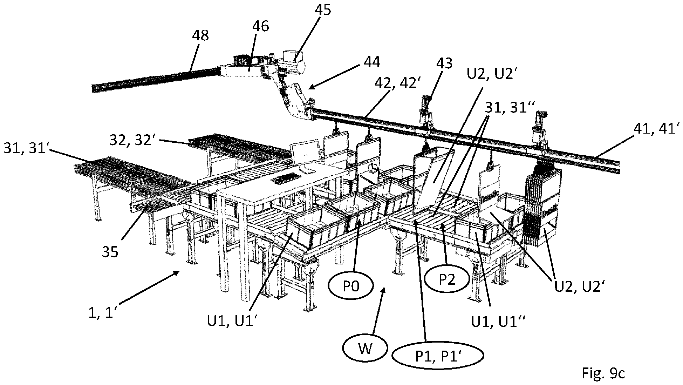

Figure 9a shows a schematic top view of a further embodiment of a manual induction station 1'. Figure 9b shows a schematic perspective view of the embodiment of the manual induction station 1' according to Figure 9a. Figure 9c shows another schematic perspective view of the embodiment of the manual induction station 1' according to Figure 9a.

The difference between such an embodiment and those embodiments shown in Figure 1 through 8 is that, additionally to first transport units U1 being donor totes U1' also first transport units U1 being order totes U1" are provided at the induction position P1 being a common induction position P1'.

An order tote infeed lane 31" is used to transport the order totes U1" to the common induction position P1'. The last section of the order tote infeed lane 31" is aligned with the second infeed lane 41 in the same vertical plane. Furthermore, the order tote takeaway lane 32" is aligned with the donor tote takeaway lane 32' and the pouch takeaway lane 42' in the same vertical plane.

The common induction position P1' is located in a common induction area CIA, which has a further induction position P2. The further induction position P2 is located upstream of the common induction position P1', but may alternatively be located downstream of the common induction position P1'. Articles A my be inducted to different transport units U1, U2 at the same time or to the same transport unit U1, U2 at different points in time.

The control is configured to synchronize the motion of the pouches U2' with the motion of the donor totes U1' and the order totes U1" at their takeaway from the supply position P0 and the common induction position P1' as well as the motion of the pouches U2' with the motion of the order totes U1" at their infeed to the common induction position P1'. Such a method is shown in Figures 9a and 9b.

In Figure 9c it can be seen, how a pouch U2' folds away, when the pouch U2' overtakes one of the order totes U1", the clearance profile CP1 of which intersecting with the clearance profile CP2 of the pouch U2'.

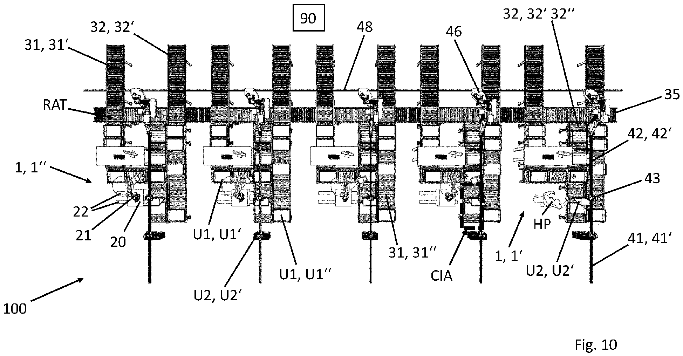

Figure 10 shows a schematic perspective view of a further embodiment of a warehouse 100 with five induction stations 1, 1', 1" according to the invention.

While the embodiment of the induction station 1 shown in Figures 9a, 9b, and 9c is an induction station 1' in manual state, the embodiment of the warehouse depicted in Figure 10 also has four hybrid induction stations 1", which are in the automated state.

In addition to the embodiment shown in Figure 8, in this embodiment donor totes U1' as well as order totes U1" may be transported via the connecting conveyor 35.

Figure 11 shows a schematic perspective view of a further embodiment of a manual induction station 1'. As the first transporting means 30 robotic vehicles 30" are used here.

With these robotic vehicles 30" donor totes U1' are transported to the supply position P0 of the induction station 1 to be presented to the human picker HP, who can pick an article A from the presented donor tote U 1' and can induct this article A either into a pouch U2' or into an order tote U1", which are also transported by robotic vehicles 30".

With such an embodiment, the first takeaway lane 32 in form of a donor tote takeaway lane 32' and an order tote takeaway lane 32" is not a physical lane, but a virtual lane, on which the robotic vehicles 30" drive away from the supply position P0 or the common induction position P1'.

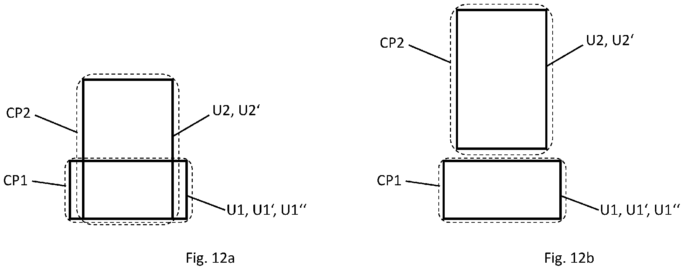

Figure 12a shows a schematic front view of a first clearance profile CP1 intersecting with a second clearance profile CP2. Although it is shown, that the clearance profile fully overlaps, a partial overlap also falls under the definition of intersecting. Figure 12b shows a schematic front view of non-intersecting first and second clearance profiles CP1, CP2.

### List of reference numerals

- 1: induction station
- 1': manual induction station
- 1": hybrid induction station
- 10: safety fence
- 10a: window
- 20: picking robot
- 21: robotic arm
- 21a: gripping device
- 22: rail
- 30: first transporting means
- 30': roller conveyor
- 30": robotic vehicle
- 31: first infeed lane
- 31': donor tote infeed lane
- 31": order tote infeed lane
- 32: first takeaway lane
- 32': donor tote takeaway lane
- 32": order tote takeaway lane
- 35: connecting conveyor
- 40: second transporting means
- 40': overhead conveyor
- 41: second infeed lane
- 41': pouch infeed lane
- 42: second takeaway lane
- 42': pouch takeaway lane
- 43: pouch opener
- 44: lifting mechanism
- 45: motor (lifting mechanism)
- 46: switch
- 47: second main infeed lane
- 48: second main takeaway lane
- 80: camera
- 90: storage system
- 100: warehouse
- A: article
- CIA: common induction area
- CP1: first clearance profile
- CP2: second clearance profile
- HP: human picker
- P0: supply position
- P1: induction position
- P1': common induction position
- P2: further induction position
- PP: parking position (picking robot)
- RAT: right angle transfer
- U1: first transport unit
- U1': donor tote
- U1": order tote
- U2: second transport unit
- U2': pouch
- W: working position

## Claims

1. Induction station (1) comprising a first transporting means (30) for transporting first transport units (U1) to and from a supply position (P0) of the induction station (1), and a second transporting means (40) for transporting second transport units (U2) to and from an induction position (P1) of the induction station (1), wherein the first transporting means (30) and the second transporting means (40) are of different type as well as the first transport units (U1) and the second transport units (U2) are of different type, **characterized in that** a first takeaway lane (32) of the first transporting means (30), which is used to transport the first transport units (U1) away from the supply position (P0), and a second takeaway lane (42) of the second transporting means (40), which is used to transport the second transport units (U2) away from the induction position (P1), are aligned in a same vertical plane, wherein the vertical plane is oriented in parallel to a gravity vector.

2. Induction station (1) according to claim 1, wherein also first transport units (U1) are provided at the same induction position (P1) as the second transport units (U2), such that the induction position (P1) is a common induction position (P1').

3. Induction station (1) according to claim 2, wherein a first infeed lane (31) of the first transporting means (30), which is used to transport the first transport units (U1) to the common induction position (P1'), and a second infeed lane (41) of the second transporting means (40), which is used to transport the second transport units (U2) to the common induction position (P1'), are aligned in a same vertical plane, wherein the vertical plane is oriented in parallel to the gravity vector.

4. Induction station (1) comprising a first transporting means (30) for transporting first transport units (U1) to and from an induction position (P1) of the induction station (1) for the first transport units (U1) and a second transporting means (40) for transporting second transport units (U2) to and from an induction position (P1) of the induction station (1) for the second transport units (U2), wherein the first transporting means (30) and the second transporting means (40) are of different type as well as the first transport units (U1) and the second transport units (U2) are of different type, **characterized in that** the induction position (P1) for the first transport units (U1) and the induction position (P1) for the second transport units (U2) form a common induction position (P1'), allowing induction into the first transport units (U1) and into the second transport units (U2).

5. Induction station (1) according to claim 4, wherein a first takeaway lane (32) of the first transporting means (30), which is used to transport the first transport units (U1) away from the common induction position (P1'), and a second takeaway lane (42) of the second transporting means (40), which is used to transport the second transport units (U2) away from the common induction position (P1'), are aligned in a same vertical plane, wherein the vertical plane is oriented in parallel to a gravity vector.

6. Induction station (1) according to claim 4 or 5, wherein a first infeed lane (31) of the first transporting means (30), which is used to transport the first transport units (U1) to the common induction position (P1'), and a second infeed lane (41) of the second transporting means (40), which is used to transport the second transport units (U2) to the common induction position (P1'), are aligned in a same vertical plane, wherein the vertical plane is oriented in parallel to a gravity vector.

7. Induction station (1) according to claim 3 or claim 6 with the features of claim 5, wherein the first takeaway lane (32), the second takeaway lane (42), the first infeed lane (31), and the second infeed lane (41) are aligned in a same vertical plane, wherein the vertical plane is oriented in parallel to the gravity vector.

8. Induction station (1) according to any of claims 2 through 7, wherein the common induction position (P1') is located in a common induction area (CIA), which has a further induction position (P2).

9. Induction station (1) according to claim 8, wherein the further induction position (P2) forms a further common induction position (P2'), allowing induction into the first transport units (U1) and into the second transport units (U2).

10. Induction station (1) according to any one of the preceding claims, wherein the first transporting means (30) is in the form of a roller conveyor (30') or of at least one robotic vehicle (30") and/or the first transport units (U1) are in the form of totes (U1', U1") and/or the second transporting means (40) is in the form of an overhead conveyor (40') and/or the second transport units (U2) are in the form of pouches (U2').

11. Induction station (1) according to any one of the preceding claims, wherein the second transporting means (40) is positioned above the first transporting means (30) or vice versa, such that a second clearance profile (CP2) of the second transport units (U2) intersects with a first clearance profile (CP1) of the first transport units (U1).

12. Induction station (1) according to any one of the preceding claims, further comprising a picking robot (20) having a robotic arm (21) for picking articles (A) from the first transport units (U1) into the second transport units (U2) or vice versa.

13. Induction station (1) according to claim 12, wherein the picking robot (20) is movable, in order to transform the induction station (1) from an automated state into a manual state, in which an induction process is carried out by a human picker (HP).

14. Induction station (1) according to claim 13, wherein the picking robot (20) is slidable, preferably supported on and/or guided by at least one rail (22), in order to be parked underneath the second transporting means (40), preferably a second infeed lane (41) of the second transporting means (40).

15. Induction station (1) according to any one of claims 12 through 14, wherein the robotic arm (21) is configured to rotate an article (A) about each of the three spatial axes.

16. Induction station (1) according to any one of the preceding claims, wherein a safety fence (10) is located between a working position (W) of the induction station (1) and the induction position (P1).

17. Warehouse (100) comprising at least one induction station (1) according to any one of claims 1 through 16 and a storage system (90) having at least one storage rack and at least one automatic storage and retrieval device, preferably of the shuttle type, wherein the at least one induction station (1) is connected to the storage system via the first transporting means (30).

18. Warehouse (100) according to claim 17, comprising at least two induction stations (1) according to any one of claims 1 through 16, wherein the first transporting means comprises a connecting conveyor (35), and wherein the two induction stations (1) are connected to each other via the connecting conveyor (35), wherein the connecting conveyor (35) preferably is positioned in and connected to a first infeed lane (31) of the first transporting means (30) and the first takeaway lane (32) of each of the at least two induction stations (1).

19. Warehouse (100) according to claim 17 or 18, wherein the warehouse (100) comprises at least one induction station (1) being in an automated state and having a picking robot (20) according to any one of claims 12 through 15, and at least one induction station (1) being in a manual state, in which an induction process is carried out by a human picker (HP).

20. Warehouse (100) according to any one of claims 17 through 19, comprising at least two induction stations (1) according to any one of claims 1 through 16, wherein the storage system (90) comprises at least four multi-level storage racks arranged in pairs of two storage racks with an aisle between the two storage racks, wherein a storage rack of a first pair is arranged back to back with a storage rack of a second pair, and/or wherein the storage system (90) comprises multiple automatic storage and retrieval devices, preferably of the shuttle type, which preferably are provided in each aisle and/or each level of the at least four storage racks, and wherein each of the at least two induction stations (1) is connected to one of the pairs of two storage racks.

21. Method for operating an induction station (1) with a first transporting means (30) having a first takeaway lane (32) used to transport first transport units (U1) away from a supply position (P0) of the induction station (1), and with a second transporting means (40) having a second takeaway lane (42) used to transport the second transport units (U2) away from an induction position (P1) of the induction station (1), wherein the first takeaway lane (32) and the second takeaway lane (42) are aligned in a same vertical plane oriented in parallel to a gravity vector, wherein by means of a control, preferably of the induction station (1), a motion of the first transport units (U1) and the second transport units (U2) at their takeaway from the supply position (P0) and the induction position (P1) is synchronized.

22. Method according to claim 21, wherein the first transporting means (30) has a first infeed lane (31) used to transport the first transport units (U1) to a common induction position (P1'), and the second transporting means (40) has a second infeed lane (41) used to transport the second transport units (U2) to the common induction position (P1'), wherein the first infeed lane (31) and the second infeed lane (41) are aligned in a same vertical plane oriented in parallel to the gravity vector, wherein by means of the control a motion of the first transport units (U1) and the second transport units (U2) at their infeed to the common induction position (P1') is controlled, such that the motion is either synchronized or such that a first transport unit (U1) overtakes a second transport unit (U2), or vice versa.

23. Method for operating an induction station (1) with a first transporting means (30) for transporting first transport units (U1) to and from a common induction position (P1') of the induction station (1) and with a second transporting means (40) for transporting second transport units (U2) to and from the common induction position (P1'), wherein by means of a control, preferably of the induction station (1), a motion of the first transport units (U1) and the second transport units (U2) at their takeaway from the common induction position (P1') is synchronized and/or a motion of the first transport units (U1) and the second transport units (U2) at their infeed to the common induction position (P1') is controlled, such that the motion is either synchronized or such that a first transport unit (U1) overtakes a second transport unit (U2), or vice versa.

24. Method according to any one of claims 21 through 23, wherein the synchronized motion includes an infeed or a takeaway of the first transport units (U1) and the second transport units (U2) in an alternating manner.

25. Method for operating a system of at least two induction stations (1) according to one of claims 1 through 16, wherein at least one of the induction stations (1) is in a manual state and at least one of the induction stations (1) is in an automated state and having a picking robot (20) according to any one of claims 12 through 15, wherein the at least two induction stations (1) are connected to each other via a connecting conveyor (35), wherein first transport units (U1) or second transport units (U2) containing at least one article (A) that was originally assigned to the induction station in the automated state, but was not picked by the picking robot (20), or is generally not pickable by the picking robot (20), is transported to the induction station (1) being in the manual state by means of the connecting conveyor (35).
